# EUROPÄISCHE PATENTSCHRIFT

(11) **EP 2 708 103 B1**
(45) Veröffentlichungstag und Bekanntmachung des Hinweises auf die Patenterteilung: **11.07.2018**
(21) Anmeldenummer: 13176265.0
(22) Anmeldetag: 12.07.2013
(51) Int. Cl.: A01B 69/00, A01B 63/112

(54) **Landwirtschaftliches Arbeitssystem**
Agricultural working system
Système de travail agricole

(30) Priorität: 14.09.2012 DE 102012018160
(43) Veröffentlichungstag der Anmeldung: 19.03.2014
(73) Patentinhaber: CLAAS Selbstfahrende Erntemaschinen GmbH, 33428 Harsewinkel (DE)
(72) Erfinder: Ellermann, Klaus, 32791 Lage (DE); Seelke, Carsten, 49448 Brockum (DE)

(56) Entgegenhaltungen:
- EP-A1- 1 338 934
- EP-A2- 0 176 725
- EP-A2- 1 714 822

## Beschreibung

Die Erfindung betrifft ein landwirtschaftliches Arbeitssystem mit einer selbstfahrenden landwirtschaftlichen Arbeitsmaschine gemäß dem Oberbegriff von Anspruch 1, die mit mindestens einem Anbaugerät, insbesondere einem Bodenbearbeitungsgerät wie einem Pflug, einem Grubber oder einer Egge, bestückbar ist sowie eine Steuerungsanordnung für ein solches Arbeitssystem gemäß dem Oberbegriff von Anspruch 15.
Bei den in Rede stehenden Arbeitsmaschinen handelt es sich beispielsweise um Traktoren, Hochlader, insbesondere Teleskoplader, aber auch um selbstfahrende Erntemaschinen o. dgl..
Das bekannte Arbeitssystem (EP 1 338 934 A1), von dem die Erfindung ausgeht, ist mit einem Traktor ausgestattet, der mit verschiedenen Anbaugeräten bestückt werden kann. Für die Steuerung aller antriebsrelevanten Komponenten, insbesondere einer den Antriebsmotor aufweisenden Antriebseinheit, eines Getriebes, einer Bremsanlage o. dgl. ist eine mikroprozessorbasierte Steuerungsanordnung vorgesehen. Für die Ein- und Ausgabe von Bedienerinformationen ist der Steuerungsanordnung eine Bedien- und Anzeigeeinheit zugeordnet.

Das Dokument EP 0 176 725 A2 offenbart ein landwirtschaftliches Arbeitssystem nach dem Oberbegriff des Anspruchs 1, und eine Steuerungsanordnung für ein landwirtschaftliches Arbeitssystem nach dem Oberbegriff des Anspruchs 14.

Anders als bei Personen- und Lastkraftwagen stellt die konstruktive Auslegung der landwirtschaftlichen Arbeitsmaschine im Hinblick auf eine einzuhaltende Lebensdauer eine besondere Herausforderung dar. Der Grund hierfür besteht in der Vielzahl möglicher Anbaugeräte, die zu extrem unterschiedlichen Belastungssituationen im Antriebsstrang der Arbeitsmaschine führt. Selbst für ein einziges Anbaugerät kann die Belastungssituation in Abhängigkeit von den jeweiligen Randbedingungen außerordentlich schwanken. Ein Beispiel hierfür ist ein als Pflug ausgestaltetes Anbaugerät, das in Abhängigkeit von der Bodenbeschaffenheit zu ganz unterschiedlichen Belastungssituationen führen kann.
Hinzu kommt, dass die in Rede stehende landwirtschaftliche Arbeitsmaschine in der Regel benutzerseitig ballastiert wird. Sofern es hier zu einer fehlerhaften Ballastierung kommt, können insbesondere an den Antriebswellen der Laufräder unnötig hohe Drehmomentbelastungen zu Lasten der zu erwartenden Lebensdauer auftreten.

Weiter ist zu berücksichtigen, dass die Arbeitsmaschine oftmals mit einem Getriebe mit stufenlos einstellbarer Drehzahl-Untersetzung (CVT-Getriebe) ausgestattet ist, wodurch sich der Antriebsmotor der Arbeitsmaschine in einem konstanten Arbeitspunkt mit vorbestimmter, vorzugsweise maximaler, Leistungsabgabe befinden kann. Dies kann bei geringen Geschwindigkeiten zu entsprechend hohen Drehmomentbelastungen an den Antriebswellen der Laufräder führen.

Für die Gewährleistung der nominellen Lebensdauer der Arbeitsmaschine im vorliegenden Sinne ist es erforderlich, dass das Lastkollektiv, das der Auslegung der Arbeitsmaschine zugrunde lag, eingehalten wird. Eine Überschreitung dieses Auslegungs-Lastkollektivs kann zu einer Reduzierung der Lebensdauer führen, sofern diese Überschreitung nicht durch eine entsprechende Minderbelastung ausgeglichen wird. Angesichts der obigen Variabilität und nicht zuletzt angesichts der zahlreichen möglichen Fehlbedienungen, die wiederum zu erhöhten Belastungen führen, stellt die Einhaltung eines obigen Auslegungs-Lastkollektivs mit dem bekannten Arbeitssystem eine Herausforderung dar.

Der Erfindung liegt das Problem zugrunde, das bekannte landwirtschaftliche Arbeitssystem derart auszugestalten und weiterzubilden, dass eine belastungsbedingte Reduzierung der Lebensdauer vermieden wird.

Das obige Problem wird bei einer Arbeitsmaschine gemäß dem Oberbegriff von Anspruch 1 durch die Merkmale des kennzeichnenden Teils von Anspruch 1 gelöst.

Wesentlich ist die Überlegung, dass die Steuerungsanordnung für mindestens eine Antriebsstrangkomponente, vorzugsweise für die Antriebswellen der Laufräder, die während des Arbeitsbetriebs auftretenden Drehmomentbelastungen ermittelt und basierend auf den ermittelnden Drehmomentbelastungen mindestens eine Steuerungsfunktion bereitstellt. Die Steuerungsfunktion dient dabei in bevorzugter Ausgestaltung zur Beseitigung und/oder Vermeidung einer zerstörenden oder lebensdauerreduzierenden Belastung von Antriebsstrangkomponenten wie den oben angesprochenen Antriebswellen der Laufräder.

Die Überlegung, einzelne Antriebsstrangkomponenten einer landwirtschaftlichen Arbeitsmaschine auf die lokalen Drehmomentbelastungen hin zu überprüfen, ermöglicht eine gezielte steuerungstechnische Beeinflussung der Belastungssituation der Arbeitsmaschine und bei entsprechender Auslegung eine gezielte Einhaltung der nominellen Lebensdauer der Arbeitsmaschine.
Grundsätzlich kann die Steuerungsanordnung als reine Maschinensteuerung ausgestaltet und in der Arbeitsmaschine angeordnet sein. Es kann aber auch vorteilhaft sein, dass zumindest ein Teil der Steuerungsanordnung als Telemetriesteuerung ausgestaltet ist, die mit einem maschinenseitigen Steuerungsteil über eine Funkverbindung o. dgl. kommuniziert (Anspruch 2).
Bei der bevorzugten Ausgestaltung gemäß Anspruch 3 wird die Drehmomentbelastung aus der drehmomentbedingten Verwindung der jeweiligen Antriebsstrangkomponente ermittelt. In besonders bevorzugter Ausgestaltung werden hier die ohnehin vorhandenen Rotationssensoren eines Anti-Blockier-Systems der Arbeitsmaschine genutzt. Um einen Absolutwert für die jeweilige Drehmomentbelastung zu erhalten, wird zunächst eine Kalibrierungsmessung bei bekannter Drehmomentbelastung, vorzugsweise bei einer gegen Null gehenden Drehmomentbelastung, gemessen. Die Messung des an sich interessierenden Drehmomentwertes wird dann relativ zu dieser Kalibriermessung vorgenommen, so dass im Ergebnis ein Absolutwert für die Drehmomentbelastung vorliegt. Diese Art der Ermittlung einer Drehmomentbelastung ist grundsätzlich bekannt (DE 10 2006 027 834 A1). Allerdings führt die vorliegende Anwendung des bekannten Messprinzips auf selbstfahrende landwirtschaftliche Arbeitsmaschinen erstmals zu der Möglichkeit der gezielten Einhaltung von Lebensdauervorgaben durch einfache steuerungstechnische Maßnahmen.

Mit einer bevorzugten, ersten Alternative in Anspruch 4 lässt sich der Bruch von Antriebsstrangkomponenten durch eine übermäßige Drehmomentbelastung weitgehend verhindern. Bei einer geeigneten Auslegung der Steuerungsanordnung kommt es bereits bei einer Annäherung der ermittelten Drehmomentbelastung an die jeweilige Bruchbelastung zu einer entsprechenden steuerungstechnischen Gegenmaßnahme. Erfindungsgemäß wird das Ist-Lastkollektiv mit dem der Auslegung der Arbeitsmaschine zugrunde gelegten Auslegungs-Lastkollektiv verglichen. Je nach Ergebnis dieses Vergleichs nimmt die Steuerungsanordnung entsprechende steuerungstechnische Maßnahmen vor. Damit ist es grundsätzlich möglich, die nominelle Lebensdauer der Arbeitsmaschine "punktgenau" zu erreichen, so dass ein optimaler Arbeitsbetrieb ohne Ausfall der Arbeitsmaschine vor Ablauf der nominellen Lebensdauer gewährleistet ist.

Die ebenfalls bevorzugten Ausgestaltungen gemäß den Ansprüchen 6 und 7 betreffen eine Reihe von Betriebssituationen, die basierend auf den ermittelten Drehmomentbelastungen steuerungstechnisch erfassbar und ggf. abstellbar sind. Die Doppelnutzung der ermittelten Drehmomentbelastungen, nämlich einerseits zur Gewährleistung der nominellen Lebensdauer und andererseits zur Optimierung der Betriebssituationen, führt vorliegend zu einer besonders kosteneffektiven Gesamtlösung.
Nach einer weiteren Lehre gemäß Anspruch 14, der eigenständige Bedeutung zukommt, wird eine Steuerungsanordnung eines oben beschriebenen Arbeitssystems als solche beansprucht. Diese Steuerungsanordnung kann, wie oben angedeutet, als reine Maschinensteuerung, oder jedenfalls zum Teil als Telemetriesteuerung ausgestaltet sein.
Im Folgenden wird die Erfindung anhand einer lediglich ein Ausführungsbeispiel darstellenden Zeichnung näher erläutert. In der Zeichnung zeigt
- Fig. 1: in einer Prinzipdarstellung die wesentlichen Komponenten des vorschlagsgemäßen landwirtschaftlichen Arbeitssystems mit einer landwirtschaftlichen Arbeitsmaschine einschließlich Anbaugerät in einer Seitenansicht, und
- Fig. 2: die Arbeitsmaschine gemäß Fig. 1 als solche in einer Draufsicht.
Für die Ausgestaltung der dargestellten Arbeitsmaschine 1a des vorschlagsgemäßen landwirtschaftlichen Arbeitssystems sind zahlreiche Varianten denkbar. Es wurde schon darauf hingewiesen, dass es sich bei der Arbeitsmaschine 1a beispielsweise um einen Traktor, einen Hochlader, insbesondere Teleskoplader, aber auch um eine selbstfahrende Erntemaschine o. dgl. handeln kann.

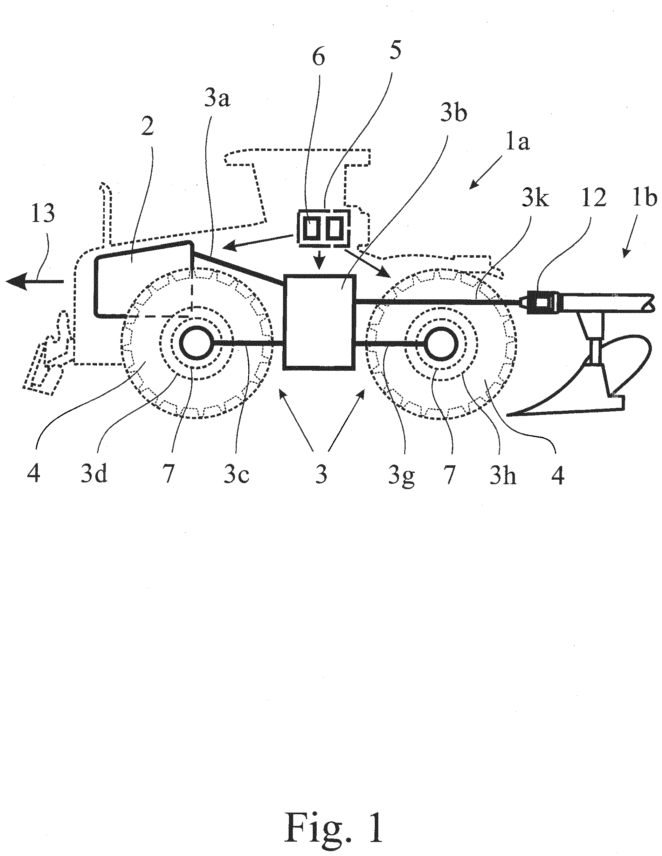

Die Arbeitsmaschine 1a lässt sich mit einer Vielzahl von Anbaugeräten 1b bestücken. Bei dem Anbaugerät 1b kann es sich jedenfalls auch um ein Bodenbearbeitungsgerät wie um einen Pflug (Fig. 1), einen Grubber oder eine Egge handeln. Andere Anbaugeräte 1, beispielsweise Heuwerbemaschinen, Saatmaschinen o. dgl. sind denkbar.

Die Arbeitsmaschine 1a ist mit einer Antriebseinheit 2 ausgestattet, die hier und vorzugsweise im Wesentlichen aus einem Dieselmotor besteht. Die Antriebseinheit 2 wirkt in üblicher Weise über einen Antriebsstrang 3 auf die hier und vorzugsweise vier Laufräder 4.

Vorzugsweise handelt es sich bei der Arbeitsmaschine 1a um eine allradgetriebene Arbeitsmaschine 1a, so dass alle vier Laufräder 4 angetrieben bzw. antreibbar sind. Die Laufräder 4 weisen in dem dargestellten und insoweit bevorzugten Ausführungsbeispiel identische Nenndurchmesser auf. Grundsätzlich können die Laufräder 4 aber auch unterschiedliche Nenndurchmesser aufweisen.

Im Einzelnen ist die Antriebseinheit 2 über die Antriebswelle 3a mit einem vorzugsweise stufenlosen Getriebe 3b gekoppelt, das die Antriebsleistung über die Antriebswelle 3c und das Differential 3d auf die beiden Antriebswellen 3e und 3f der vorderen Laufräder 4 und über die Antriebswelle 3g über das Differential 3h auf die Antriebswellen 3i und 3j der hinteren Laufräder 4 weiterreicht. Ferner ist eine Zapfwelle 3k vorgesehen, die ebenfalls vom Getriebe 3b ausgeht und die dem Antrieb des jeweiligen Anbaugerätes 1b dienen kann.

Zur Ansteuerung der antriebsrelevanten Komponenten ist eine Steuerungsanordnung 5 und eine der Steuerungsanordnung 5 zugeordnete Bedien- und Anzeigeeinheit 6 vorgesehen. Bei den anzusteuernden antriebsrelevanten Komponenten handelt es sich hier um die oben bereits angesprochene Antriebseinheit 2, das Getriebe 3b, die beiden Differentiale 3d, 3h sowie um weitere antriebsrelevante Komponenten wie das Bremssystem 7 o. dgl..

Wesentlich ist nun, dass die Steuerungsanordnung 5 für mindestens eine Antriebsstrangkomponente 3a-k, hier und vorzugsweise für die Antriebswellen 3e, f, i, j der Laufräder 4, die während des Arbeitsbetriebs auftretenden Drehmomentbelastungen ermittelt und basierend auf den ermittelten Drehmomentbelastungen mindestens eine Steuerungsfunktion, hier und vorzugsweise eine Steuerungsfunktion zur Beseitigung und/oder Vermeidung einer zerstörenden oder lebensdauerreduzierenden Belastung von Antriebsstrangkomponenten, bereitstellt.

Hier und vorzugsweise handelt es sich bei der Steuerungsanordnung 5 um eine reine Maschinensteuerung, die komplett in der Arbeitsmaschine 1a untergebracht ist. Es kann aber auch vorteilhaft sein, dass zumindest ein Teil der Steuerungsanordnung 5 als Telemetriesteuerung ausgestaltet und getrennt von der Arbeitsmaschine 1a angeordnet ist. Die Telemetriesteuerung kann beispielsweise entfernt von der Arbeitsmaschine 1a in einem Verwaltungsgebäude des Maschinenbetreibers oder des Maschinenherstellers angeordnet sein und über eine Funkverbindung, eine UMTS-Verbindung o. dgl. mit dem maschinenseitigen Teil der Steuerungsanordnung 5 kommunizieren.

Die Ermittlung der Drehmomentbelastungen kann grundsätzlich fortlaufend während des gesamten Arbeitsbetriebs der Arbeitsmaschine la vorgesehen sein. Damit wird sichergestellt, dass auf jegliche Drehmomentbelastung, die eine übermäßige Belastung des Antriebsstrangs 3 darstellt, reagiert werden kann. Grundsätzlich ist es aber auch denkbar, dass die Ermittlung der Drehmomentbelastungen in vorgegebenen Zeitabständen oder aber getriggert durch ein vorbestimmtes Ereignis, beispielsweise ein Bedienereignis, stattfinden.

Bei dem dargestellten und insoweit bevorzugten Ausführungsbeispiel werden ausschließlich die Antriebswellen 3e, f, i, j der Laufräder 4 im Hinblick auf deren Drehmomentbelastungen überwacht. Zusätzlich kann es auch vorgesehen sein, dass die Zapfenwelle 3k oder aber die Antriebswellen 3a, 3c und 3g, entsprechend überwacht werden.

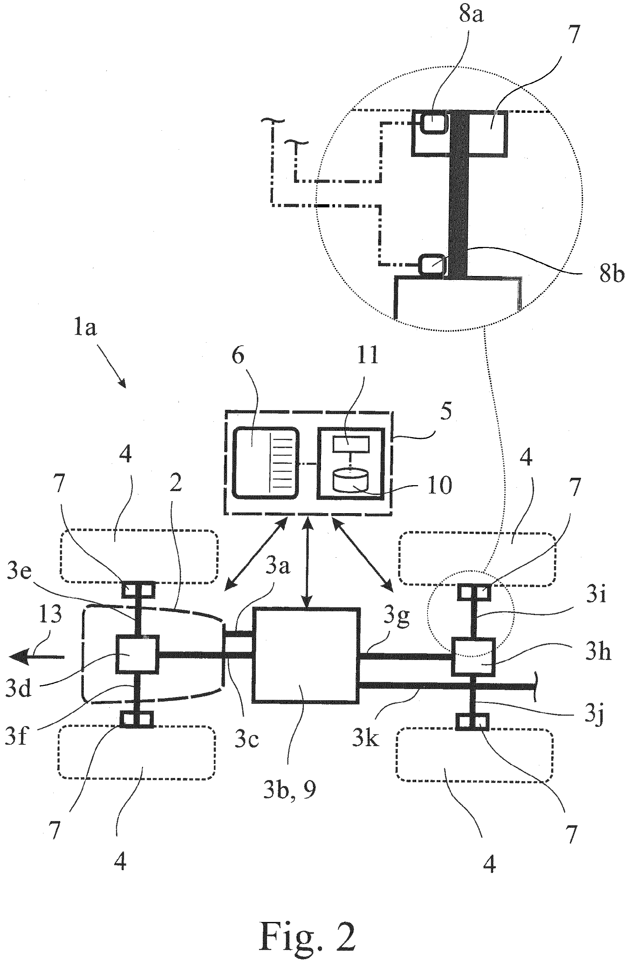

In besonders bevorzugter Ausgestaltung geht die Ermittlung der eine Antriebsstrangkomponente 3e, f, i, j betreffenden Ermittlung der Drehmomentbelastung auf die drehmomentbedingte Verwindung der jeweiligen Antriebsstrangkomponente 3e, f, i, j zurück. Hier und vorzugsweise ist es so, dass die Ermittlung der drehmomentbedingten Verwindung unter Nutzung von entlang der Antriebsstrangkomponente 3e, f, i, j beabstandeten Rotationssensoren 8a, 8b erfolgt. Bei den Rotationssensoren 8a, 8b kann es sich beispielsweise um Drehwinkelsensoren oder um Drehzahlsensoren handeln, wobei im letzten Fall vorzugsweise eine Maßnahme, insbesondere eine Zeitmessung, zur Erfassung einer Winkeldifferenz zwischen den beiden Drehwinkelsensoren zu treffen ist. In Fig. 2 handelt es sich jedenfalls bei dem Sensor 8a um einen Rotationssensor eines Anti-Blockier-Systems, was zu einem kosteneffektiven Aufbau führt. Es darf darauf hingewiesen werden, dass die für die Ermittlung der Drehmomentbelastung vorgesehenen Sensoren 8a, 8b in Fig. 2 nur für das dort rechts oben dargestellte Laufrad 4 gezeigt sind. Alle Antriebswellen 3e, f, i, j der Laufräder 4 sind bei dem dargestellten Ausführungsbeispiel jeweils mit einem Paar solcher Rotationssensoren ausgestattet.
Der Arbeitsmaschine 1a ist im Arbeitsbetrieb eine Antriebskonfiguration zugeordnet. Die Antriebskonfiguration umfasst alle maschinenspezifischen, steuerungstechnischen und mechanischen Parameter, die einen Einfluss auf die Drehmomentbelastungen im Antriebsstrang 3 während des Arbeitsbetriebs ausüben. Die Antriebskonfiguration umfasst somit beispielsweise die Ansteuerung der Antriebseinheit 2 im Hinblick auf deren Leistungseinstellungen, die Getriebeansteuerung, die Ballastierung etc.. Die Steuerungsanordnung 5 ermittelt basierend auf den ermittelten Drehmomentbelastungen eine Bewertung und/oder Optimierung der Antriebskonfiguration im Hinblick auf verschiedene Zielvorgaben wie geringe Bruchwahrscheinlichkeit, nominelle Lebensdauer und/oder hohe Geräteleistung. Weiter gibt die Steuerungsanordnung 5 einen Bedienerhinweis zu der Bewertung und/oder Optimierung im Hinblick auf mindestens eine Zielvorgabe. Alternativ oder zusätzlich nimmt die Steuerungsanordnung 5 selbst die ermittelte Optimierung der Antriebskonfiguration durch eine entsprechende Ansteuerung von insbesondere motorischen Komponenten vor, sofern entsprechende Automatikfunktionen wie eine automatische Ballastierung o. dgl. verfügbar sind.
Die Ermittlung der obigen Bewertung und/oder Optimierung erfolgt vorzugsweise auch in Abhängigkeit von der Art des jeweils genutzten Anbaugeräts 1b. Beispielsweise können hierfür die jeweils relevanten Parameter bekannter Anbaugeräte 1b in einem Datenspeicher der Steuerungsanordnung 5 abgelegt sein.

Der dargestellte Antriebsstrang 3 weist wie oben angedeutet ein Getriebe 3b auf, das zumindest in einem Teilantriebsstrang als CVT-Getriebe 9 ausgestaltet ist. Die Drehzahluntersetzung des CVT-Getriebes 9 ist mittels der Steuerungsanordnung 5 stufenlos einstellbar. In einer Betriebsart stellt die Steuerungsanordnung 5 die Antriebseinheit 2 auf eine konstante Leistungsabgabe ein, bei der es sich vorzugsweise um die maximale Leistungsabgabe handelt. Damit ist gewährleistet, dass die Antriebseinheit 2 stets im optimalen Betriebspunkt läuft. Die Änderung der Fahrgeschwindigkeit ergibt sich entsprechend durch eine variable Einstellung der Drehzahluntersetzung des CVT-Getriebes 9, die regelmäßig in Abhängigkeit von den Bedienervorgaben, insbesondere in Abhängigkeit von der bedienerseitigen Betätigung eines Fahrpedals, abhängt.

Die Steuerungsanordnung 5 ist in der Zeichnung als zentrale Steuerungsanordnung 5 angedeutet, die jedenfalls einen Datenspeicher 10 und einen Mikroprozessor 11 aufweist. Die Steuerungsanordnung 5 kann allerdings zumindest teilweise dezentral verteilt ausgestaltet sein, wie oben angesprochen. Insoweit ist die zeichnerische Darstellung lediglich als Andeutung einer Steuerungsstruktur zu verstehen.

Um beispielsweise einem Bruch einer Antriebswelle 3e, f, i, j vorzubeugen, erfasst die Steuerungsanordnung 5 in einer bevorzugten Ausgestaltung die Annäherung der Belastungssituation an eine Bruchsituation. Es wird vorgeschlagen, dass in einem Datenspeicher 10 der Steuerungsanordnung 5 für verschiedene Antriebsstrangkomponenten 3e, f, i, j die jeweiligen Bruchbelastungen gespeichert sind, wobei die Steuerungsanordnung 5 die vorschlagsgemäß ermittelten Drehmomentbelastungen mit den jeweiligen Bruchbelastungen vergleicht und basierend auf dem Vergleich eine Bewertung und/oder Optimierung der Antriebskonfiguration im Hinblick auf den Zielparameter einer geringen Bruchwahrscheinlichkeit ermittelt. Im einfachsten Fall wäre es hier denkbar, die Leistungsabgabe der Antriebseinheit 2 zu reduzieren. Eine andere Möglichkeit besteht darin, die Drehmomentverteilung zwischen den Wellen 3c und 3g durch eine entsprechende Ansteuerung des Getriebes 3b zu variieren. Grundsätzlich wäre es aber auch denkbar, dass es bei einem einfachen Bedienerhinweis bleibt, so dass der Bediener die notwendigen Maßnahmen selbst treffen kann.

Bei der erfindungsgemäßen Ausgestaltung, bei der die Einhaltung einer nominellen Lebensdauer der Arbeitsmaschine 1a im Vordergrund steht, wird zunächst vorgeschlagen, dass in einem Datenspeicher 10 der Steuerungsanordnung 5 ein Auslegungs-Lastkollektiv gespeichert ist. Bei dem Auslegungs-Lastkollektiv handelt es sich um dasjenige Lastkollektiv, das der Auslegung der Arbeitsmaschine 1a im Hinblick auf die nominelle Lebensdauer zugrunde lag. Die Ermittlung eines solchen Lastkollektivs wird beispielsweise in der Veröffentlichung "Ermittlung von prozessabhängigen Lastkollektiven eines hydrostatischen Fahrantriebsstrangs am Beispiel eines Teleskopleiters, Andreas Huber, Karlsruher Schriftenreihe Fahrzeugsystemtechnik, Band 2, 2010, ISBN 978-3-86644-564-2", gegeben.

Interessant ist nun, dass die Steuerungsanordnung 5 aus der ermittelten Drehmomentbelastung ein Ist-Lastkollektiv für den Antriebsstrang 3, hier für die Antriebsstrangkomponenten 3e, f, i, j, ermittelt. Die Steuerungsanordnung 5 vergleicht das Ist-Lastkollektiv vorzugsweise fortlaufend mit dem Auslegungs-Lastkollektiv. Basierend auf dem Vergleich ermittelt die Steuerungsanordnung 5 eine Bewertung und/oder Optimierung im Hinblick auf die Zielvorgabe einer nominellen Lebensdauer. In besonders bevorzugter Ausgestaltung setzt die Steuerungsanordnung 5 die ermittelte Optimierung um und steuert basierend auf dem Vergleich die antriebsrelevanten Komponenten zur entsprechenden Änderung der Antriebskonfiguration an. Alternativ oder zusätzlich kann es auch vorgesehen sein, dass ein Bedienerhinweis hinsichtlich des Ergebnisses des Vergleichs abgegeben wird.
Insbesondere im Hinblick auf die Überprüfung von Gewährleistungsansprüchen wird in einer Variante vorgeschlagen, dass in einem Datenspeicher 10 der Steuerungsanordnung 5 das Ist-Lastkollektiv zumindest abschnittsweise, insbesondere während einer Überschreitung des Auslegungs-Lastkollektivs durch das Ist-Lastkollektiv, dauerhaft gespeichert wird. Vor diesem Hintergrund ist es vorzugsweise so, dass die Steuerungsanordnung 5 bei einer Überschreitung des Auslegungs-Lastkollektivs durch das Ist-Lastkollektiv einen fortgesetzten Betrieb erst nach einer Quittierung durch den Bediener erlaubt. Eine so erfolgte Quittierung wird vorzugsweise ebenfalls dauerhaft in einem Datenspeicher 10 gespeichert.

Sofern das Ist-Lastkollektiv stets unterhalb des Auslegungs-Lastkollektivs liegt, ist mit der Einhaltung der nominellen Lebensdauer, die ja auf dem Auslegungs-Lastkollektiv beruht, zu rechnen. Liegt das Ist-Lastkollektiv allerdings oberhalb des Auslegungs-Lastkollektivs, so reduziert sich die zu erwartende Lebensdauer, so dass entsprechende Gegenmaßnahmen zu treffen sind. Eine mögliche Gegenmaßnahme besteht darin, die Leistungsabgabe der Antriebseinheit 2 zu reduzieren. Eine andere Möglichkeit besteht darin, die Ballastierung der Arbeitsmaschine 1a zu optimieren.

Die Antriebskonfiguration umfasst wie oben angedeutet die Ballastierung der Arbeitsmaschine 1a, mit der sich die Gewichtsbelastung der Laufräder 4 durch Zusatzgewichte variieren lässt. Entsprechend betrifft die obige Optimierung der Antriebskonfiguration vorzugsweise auch die Ballastierung. Grundsätzlich ist es denkbar, dass die Steuerungsanordnung 5 aus den ermittelten Drehmomentbelastungen zur Beseitigung und/oder Vermeidung einer zerstörenden oder lebensdauerreduzierenden Belastung von Antriebsstrangkomponenten 3e, f, i, j eine Änderung der Ballastierung ermittelt. Beispielsweise ist die Ballastierung fehlerhaft, wenn an den vorderen Laufrädern 4 eine besonders hohe Belastung anliegt, während die hinteren Laufräder 4 eine besonders geringe Belastung, ggf. sogar im Schlupfbetrieb, zeigen. In einem solchen Fall ist die vordere Ballastierung zu reduzieren und die hintere Ballastierung zu erhöhen. Grundsätzlich kann die Steuerungsanordnung 5 die ermittelte Änderung der Ballastierung über ein automatisches Ballastierungssystem vornehmen, bei dem es sich vorzugsweise um ein motorisches Ballastierungssystem handelt. Alternativ oder zusätzlich kann es aber vorgesehen sein, dass die Steuerungsanordnung 5 einen die Änderung der Ballastierung betreffenden Bedienerhinweis abgibt. In einem solchen Fall kann der Bediener die Ballastierung wie an sich üblich manuell ändern.

Eine andere bevorzugte Variante für die Optimierung der Drehmomentverteilung besteht in der Optimierung der Höhe des Zugpunktes 12 zwischen der Arbeitsmaschine 1a und dem Anbaugerät 1b, sofern dieser Zugpunkt 12 höhenverstellbar ist. Die Höhe des Zugpunkts ist somit ebenfalls der Antriebskonfiguration zuzurechnen und von der obigen Optimierung betroffen. Durch eine Höhenverstellung des Zugpunkts lässt sich die Drehmomentverteilung zwischen Vorder- und Hinterachse steuern, ohne dass der Arbeitsbetrieb negativ beeinflusst wird. Vorschlagsgemäß ermittelt die Steuerungsanordnung 5 aus den vorschlagsgemäß ermittelten Drehmomentbelastungen zur Beseitigung und/oder Vermeidung einer zerstörenden und/oder lebensdauerreduzierenden Belastung von Antriebsstrangkomponenten 3e, f, i, j eine Änderung der Höhe des Zugpunkts 12, wobei die Änderung der Höhe grundsätzlich motorisch, gesteuert durch die Steuerungsanordnung 5, stattfinden kann. Hier und vorzugsweise gibt die Steuerungsanordnung 5 allerdings einen Bedienerhinweis betreffend die ermittelte Änderung der Höhe der Zugpunkts 12 ab, aufgrund derer der Bediener eine manuelle Einstellung der Höhe des Zugpunkts vornehmen kann.

Schließlich ist es auch möglich, eine Belastungsverteilung durch eine Änderung der Reifendrücke der Laufräder 4 herbeizuführen, die wiederum der Antriebskonfiguration zuzurechnen und entsprechend in obigem Sinne optimierbar sind. Vorzugsweise ermittelt die Steuerungsanordnung 5 aus den vorschlagsgemäß ermittelten Drehmomentbelastungen eine Änderung der Reifendrücke, die eine vorbestimmte Belastungsverteilung für die Antriebswellen 3e, f, i, j ergibt, wobei in einer Variante die Steuerungsanordnung 5 einen Bedienerhinweis betreffend die ermittelte Änderung der Reifendrücke abgibt. Alternativ oder zusätzlich kann es aber auch vorgesehen sein, dass die Steuerungsanordnung 5 die Änderung der Reifendrücke mittels eines Reifenkontrollsystems mit Kompressor o. dgl. vornimmt.

Die vorschlagsgemäß ermittelten Drehmomentbelastungen lassen sich aber nicht nur im Hinblick auf die Vermeidung der Zerstörung von Antriebskomponenten bzw. für die Einhaltung der nominellen Lebensdauer der Arbeitsmaschine la einsetzen. Vielmehr dienen die vorschlagsgemäß ermittelten Drehmomentbelastungen auch zur Ermittlung vorbestimmter Betriebssituationen, deren Parameter vorschlagsgemäß in einem Datenspeicher 10 der Steuerungsanordnung 5 gespeichert sind. Bei diesen Betriebssituationen handelt es sich vorzugsweise um Gefahren-Betriebssituationen. Vorzugsweise ist es so, dass die Steuerungsanordnung 5 einen Bedienerhinweis betreffend die Ermittlung einer Betriebssituation abgibt und/oder dass die Steuerungsanordnung 5 der Betriebssituation insbesondere durch eine Änderung der Antriebskonfiguration entgegenwirkt.

Bei einer Betriebssituation handelt es sich beispielsweise um die sogenannte "Kippsituation", in der die Arbeitsmaschine 1a bezogen auf ihre Maschinenlängsachse 13 zu einer Seite geneigt ist. Diese Kippsituation äußert sich durch eine bezogen auf die Maschinenlängsachse 13 einseitige Drehmomentbelastung der Antriebswellen 3e, f, i, j, wobei die Steuerungsanordnung 5 ebenfalls einen den Kippbetrieb betreffenden Bedienerhinweis abgibt. Alternativ oder zusätzlich kann es vorgesehen sein, dass die Steuerungsanordnung 5 in die Lenkung o. dgl. eingreift, um die Kippgefahr zu reduzieren.

Eine andere Betriebssituation wird als "Power-Hopping" bezeichnet. Dies wird von der Steuerungsanordnung 5 als anschwellende, zyklische Drehmomentbelastung mit vorbestimmter Schwingungsamplitude an den Antriebswellen 3e, f, i, j der Laufräder 4 erfasst. Basierend auf der Erfassung werden steuerungstechnische, hier und vorzugsweise antizyklische Maßnahmen gegen diesen Betriebssituation getroffen. Dabei kann es sich um eine antizyklische Änderung der Leistungsabgabe der Antriebseinheit 2 oder um eine entsprechende antizyklische Bremsung über das Bremssystem 7 handeln. Eine andere bevorzugte Möglichkeit besteht darin, dass die Steuerungsanordnung 5 zur Beseitigung dieses Zustands die Höhe des Zugpunkts zwischen der Arbeitsmaschine und dem Anbaugerät 1b verändert.

Der Betriebssituation "Schubsituation" ist für Hangfahrten von besonderer Bedeutung. Hier kann es aufgrund des gravitationsbedingten Schubes zu einem negativen Schlupf kommen, ohne dass dies vom Bediener bemerkt wird. Durch die vorschlagsgemäß ermittelte Drehmomentbelastung lässt sich dieser Betriebssituation leicht erfassen und dem Bediener über einen entsprechenden Bedienerhinweis zur Kenntnis bringen.

Eine andere Betriebssituation wird als "Verstopfungssituation" bezeichnet, in der ein Pflug o. dgl. mit Erde verstopft ist. Die hiermit verbundene, zunehmende Drehmomentbelastung, die sich in einem vorbestimmten, in einem Datenspeicher 10 der Steuerungsanordnung 5 abgespeicherten Umfang bewegt, wird von der Steuerungsanordnung 5 entsprechend als "Verstopfungssituation" erfasst. Ein entsprechender Bedienerhinweis wird vorzugsweise über die Bedien- und Anzeigeeinheit 6 abgegeben. Alternativ oder zusätzlich kann die Steuerungsanordnung 5 zur Beseitigung dieses Zustands beispielsweise die Arbeitstiefe des Anbaugeräts 1b, hier des Pflugs o. dgl., verändern.

Eine besonders vorteilhafte Anwendung der vorschlagsgemäß ermittelten Drehmomentbelastungen der Antriebswellen 3e, f, i, j der Laufräder 4 zeigt sich, wenn die Arbeitsmaschine 1a mit mindestens einem, hier nicht dargestellten Anhänger, betrieben wird. Dies betrifft vor allem die Vermeidung des Einknickens des Zuges, wenn der mindestens eine Anhänger bei einer Hangfahrt auf die Arbeitsmaschine 1a schiebt. Der Schubbetrieb lässt sich durch die Steuerungsanordnung 5 wie oben erläutert, erfassen. Basierend auf dieser Erfassung ist es vorgesehen, dass die Steuerungsanordnung 5 zur Vermeidung des Einknickens des Zuges eine entsprechende Bremsung des mindestens einen Anhängers ansteuert.

Die vorschlagsgemäß ermittelten Drehmomentbelastungen lassen sich aber auch zur Überprüfung der Leistungsabgabe der Antriebseinheit 2 nutzen. Vorzugsweise ist es so, dass in einem Datenspeicher 10 der Steuerungsanordnung 5 Soll-Leistungsdaten der Antriebseinheit 2 gespeichert sind, wobei basierend auf der ermittelten Drehmomentbelastung die aktuelle Leistungsabgabe der Antriebseinheit 2 ermittelt und mit den Soll-Leistungsdaten verglichen wird. In der Folge gibt die Steuerungsanordnung 5 einen die jeweilige Abweichung betreffenden Bedienerhinweis ab. Alternativ oder zusätzlich kann es vorgesehen sein, dass die jeweilige Abweichung gespeichert wird. Dabei sind nicht nur Abweichungen nach unten, sondern auch Abweichungen nach oben interessant, die auf benutzerseitige, leistungssteigernde Maßnahmen schließen lassen. Solche leistungssteigernde Maßnahmen schränken regelmäßig Garantieansprüche ein, so dass die obige Speicherung der ermittelten Abweichung von Interesse sein kann.

Basierend auf der vorschlagsgemäßen Ermittlung der Drehmomentbelastungen kann auch die Drehmomentverteilung zwischen den einzelnen Antriebswellen 3e, f, i, j geregelt werden. Damit lässt sich auf besonders einfache Weise eine Soll- Drehmomentverteilung auf die einzelnen Antriebswellen 3e, f, i, j erzielen. In besonders bevorzugter Ausgestaltung wird die einzustellende Soll-Drehmomentverteilung vom Bediener über die Bedien- und Anzeigeeinheit 6 vorgegeben.

Die vorschlagsgemäß ermittelten Drehmomentbelastungen können aber auch für den Bremsbetrieb gewinnbringend Berücksichtigung finden. Vorzugsweise steuert die Steuerungsanordnung 5 die antriebsrelevanten Komponenten derart, dass die Antriebswellen 3e, f, i, j der Laufräder 4 keine Drehmomentbelastung oder eine bremsende Drehmomentbelastung aufweisen. Damit ist sichergestellt, dass die Antriebseinheit 2 nicht gegen das Bremssystem 7 arbeitet.

Vorzugsweise ist die Arbeitsmaschine 1a mit mindestens einer mittels der Steuerungsanordnung 5 schaltbare Differentialsperre 3d, 3h ausgestattet, wobei die Steuerungsanordnung 5 das Sperren und/oder Lösen der Differentialsperre 3d, 3h ausschließlich in einem Zustand vornimmt, in dem die vorschlagsgemäß ermittelte Drehmomentbelastung an beiden der Differentialsperre 3d, 3h zugeordneten Teilantriebssträngen 3e, f, i, j das Sperren bzw. Lösen konstruktionsbedingt zulassen. Dies ist vorzugsweise der Fall, wenn die vorschlagsgemäß ermittelten Drehmomentbelastungen an beiden der Differentialsperre 3d, 3h zugeordneten Teilantriebssträngen 3e, f, i, j im Wesentlichen identisch sind. Damit wird der Bediener davon entlastet, den richtigen Zeitpunkt für das Sperren bzw. Lösen der Differentialsperre 3d, 3h manuell zu finden.

Interessant ist noch die Ausstattung der Steuerungsanordnung 5 mit einer Betriebsdauerzählerfunktion für den Antriebsstrang 3 bzw. für einzelne Antriebsstrangkomponenten. Dabei ist es vorzugsweise vorgesehen, dass neben der Betriebsdauer auch die ermittelte Drehmomentbelastung gespeichert wird. In besonders bevorzugter Ausgestaltung ist die Geschwindigkeit der Betriebsdauerzählung belastungsabhängig von der Steuerungsanordnung 5 vorgegeben. Hier sind unterschiedliche Varianten denkbar. Wesentlich ist, dass gewissermaßen eine belastungsabhängige Gewichtung der Betriebsdauern vorgenommen wird. Dies führt zu einer besonders wirklichkeitsnahen Beurteilung der Betriebsdauer.

Nach einer weiteren Lehre, der eigenständige Bedeutung zukommt, wird die Steuerungsanordnung 5 eines oben beschriebenen Arbeitssystems als solche beansprucht. Auf alle Ausführungen zu dem vorschlagsgemäßen Arbeitssystem, die geeignet sind, die Steuerungsanordnung 5 zu beschreiben, darf verwiesen werden.

## Patentansprüche

1. Landwirtschaftliches Arbeitssystem mit einer selbstfahrenden landwirtschaftlichen Arbeitsmaschine (1a), die mit mindestens einem Anbaugerät (1b), insbesondere einem Bodenbearbeitungsgerät wie einem Pflug, einem Grubber oder einer Egge, bestückbar ist, wobei eine Antriebseinheit (2) vorgesehen ist, die über einen Antriebsstrang (3) auf Laufräder (4) wirkt und wobei eine Steuerungsanordnung (5) und eine der Steuerungsanordnung (5) zugeordnete Bedien- und Anzeigeeinheit (6) vorgesehen sind, wobei die Steuerungsanordnung (5) für mindestens eine Antriebsstrangkomponente (3a-k), insbesondere für die Antriebswellen (3e,f,i,j) der Laufräder (4), die während des Arbeitsbetriebs auftretenden Drehmomentbelastungen ermittelt und basierend auf den ermittelten Drehmomentbelastungen mindestens eine Steuerungsfunktion bereitstellt, wobei der Arbeitsmaschine (1a) im Arbeitsbetrieb eine Antriebskonfiguration zugeordnet ist und dass während des Arbeitsbetriebs über die Antriebskonfiguration die Drehmomentbelastungen im Antriebsstrang (3) beeinflussbar sind und dass die Steuerungsanordnung (5) basierend auf den ermittelten Drehmomentbelastungen vorzugsweise während des Arbeitsbetriebs eine Bewertung und/oder Optimierung der Antriebskonfiguration im Hinblick auf verschiedene Zielvorgaben wie geringe Bruchwahrscheinlichkeit, nominelle Lebensdauer und/oder hohe Geräteleistung ermittelt und/oder einen Bedienerhinweis zu der Bewertung und/oder Optimierung im Hinblick auf mindestens eine Zielvorgabe abgibt und/oder die ermittelte Optimierung der Antriebskonfiguration vornimmt, **dadurch gekennzeichnet, dass** in einem Datenspeicher (10) der Steuerungsanordnung (5) ein Auslegungs-Lastkollektiv gespeichert ist, dem eine nominelle Lebensdauer des Antriebsstrangs (3) entspricht, dass die Steuerungsanordnung (5) aus der ermittelten Drehmomentbelastung ein Ist-Lastkollektiv für den Antriebsstrang (3) ermittelt, und dass die Steuerungsanordnung (5) das Ist-Lastkollektiv mit dem Auslegungs-Lastkollektiv vergleicht und basierend auf dem Vergleich eine Bewertung und/oder Optimierung der Antriebskonfiguration im Hinblick auf die Zielvorgabe einer nominellen Lebensdauer ermittelt.

2. Arbeitssystem nach Anspruch 1, **dadurch gekennzeichnet, dass** zumindest ein Teil der Steuerungsanordnung (5) als Maschinensteuerung ausgestaltet und in der Arbeitsmaschine (1a) angeordnet ist, vorzugsweise, dass zumindest ein Teil der Steuerungsanordnung (5) als Telemetriesteuerung ausgestaltet und getrennt von der Arbeitsmaschine (1a) angeordnet ist.

3. Arbeitssystem nach Anspruch 1 oder 2, **dadurch gekennzeichnet, dass** die Steuerungsanordnung (5) aus der drehmomentbedingten Verwindung der mindestens einen Antriebsstrangkomponente (3a-k) die diese Antriebsstrangkomponente (3a-k) betreffende Drehmomentbelastung ermittelt, vorzugsweise, dass die Ermittlung der drehmomentbedingten Verwindung unter Nutzung mindestens eines Rotationssensors (8a) eines Anti-Blockier-Systems erfolgt.

4. Arbeitssystem nach Anspruch 3, **dadurch gekennzeichnet, dass** in einem Datenspeicher (10) der Steuerungsanordnung (5) für mindestens eine Antriebsstrangkomponente (3a-k) die dazugehörigen Bruchbelastungen gespeichert sind, dass die Steuerungsanordnung (5) die ermittelten Drehmomentbelastungen mit den jeweiligen Bruchbelastungen vergleicht und basierend auf dem Vergleich eine Bewertung und/oder Optimierung der Antriebskonfiguration im Hinblick auf die Zielvorgabe einer geringen Bruchwahrscheinlichkeit ermittelt,
und/oder, dass die Antriebskonfiguration die Ballastierung der Arbeitsmaschine (1a) umfasst und dass die Bewertung und/oder die Optimierung die Ballastierung betrifft, und/oder, dass die Antriebskonfiguration die Höhe des Zugpunkts zwischen der Arbeitsmaschine und dem Anbaugerät (1b) umfasst und dass die Bewertung und/oder Optimierung die Höhe des Zugpunkts betrifft,
und/oder, dass die Antriebskonfiguration die Reifendrücke der Laufreifen (4) umfasst und dass die Bewertung und/oder Optimierung die Reifendrücke der Laufreifen (4) betrifft.

5. Arbeitssystem nach einem der vorhergehenden Ansprüche, **dadurch gekennzeichnet, dass** die Steuerungsanordnung (5) aus der ermittelten Drehmomentbelastung ein Ist-Lastkollektiv für den Antriebsstrang (3) ermittelt und dass in einem Datenspeicher (10) der Steuerungsanordnung (5) das Ist-Lastkollektiv zumindest abschnittsweise, insbesondere während einer Überschreitung des Auslegungs-Lastkollektivs durch das Ist-Lastkollektiv, dauerhaft gespeichert wird, und/oder, dass die Steuerungsanordnung (5) bei einer Überschreitung des Auslegungs-Lastkollektivs durch das Ist-Lastkollektiv einen fortgesetzten Betrieb erst nach einer Quittierung durch den Bediener erlaubt.

6. Arbeitssystem nach einem der vorhergehenden Ansprüche, **dadurch gekennzeichnet, dass** in einem Datenspeicher (10) der Steuerungsanordnung (5) die Parameter vorbestimmter Betriebssituationen, insbesondere Gefahren-Betriebssituationen, gespeichert sind, vorzugsweise, dass die Steuerungsanordnung (5) einen Bedienerhinweis betreffend die Ermittlung einer Betriebssituation abgibt und/oder dass die Steuerungsanordnung (5) der Betriebssituation insbesondere durch eine Änderung der Antriebskonfiguration entgegenwirkt.

7. Arbeitssystem nach Anspruch 6, **dadurch gekennzeichnet, dass** die Steuerungsanordnung (5) eine bezogen auf die Maschinenlängsachse (13) einseitige Drehmomentbelastung der Antriebswellen (3e, f, i, j) der Laufräder (4) als Betriebssituation "Kippsituation" erfasst,
und/oder, dass die Steuerungsanordnung (5) eine anschwellende, zyklische Drehmomentbelastung mit vorbestimmter Schwingungsamplitude an den Antriebswellen (3e, f, i, j) der Laufräder (4) als Betriebssituation "Power-Hopping" erfasst,
und/oder, dass die Steuerungsanordnung (5) das Auftreten einer Schubbelastung über die ermittelte Drehmomentbelastung an den Antriebswellen (3e, f, i, j) der Laufräder (4) als Betriebssituation "Schubsituation" erfasst,
und/oder, dass die Steuerungsanordnung (5) eine zunehmende Drehmomentbelastung in einem vorbestimmten Umfang als Betriebssituation "Verstopfungssituation" des Anbaugeräts (1b) erfasst.

8. Arbeitssystem nach einem der vorhergehenden Ansprüche, **dadurch gekennzeichnet, dass** die Steuerungsanordnung (5) im Falle des Arbeitsbetriebs mit mindestens einem Anhänger bei einer Änderung der ermittelten Drehmomentbelastung der Antriebswellen (3e, f, i, j) der Laufräder (4) von einer Zugbelastung in eine Schubbelastung zur Vermeidung eines Einknickens des Zuges eine entsprechende Bremsung des mindestens einen Anhängers ansteuert.

9. Arbeitssystem nach einem der vorhergehenden Ansprüche, **dadurch gekennzeichnet, dass** in einem Datenspeicher (10) der Steuerungsanordnung (5) Soll-Leistungsdaten der Antriebseinheit (2) gespeichert sind und dass basierend auf der ermittelten Drehmomentbelastung die aktuelle Leistungsabgabe der Antriebseinheit (2) ermittelt und mit den Soll-Leistungsdaten verglichen wird und dass die Steuerungsanordnung (5) einen die jeweilige Abweichung betreffenden Bedienerhinweis abgibt und/oder die ermittelte Abweichung speichert.

10. Arbeitssystem nach einem der vorhergehenden Ansprüche, **dadurch gekennzeichnet, dass** in einem Datenspeicher (10) der Steuerungsanordnung (5) eine Soll-Drehmomentverteilung auf einzelne Antriebswellen (3a-k) gespeichert ist und dass die Steuerungsanordnung (5) basierend auf der ermittelten Drehmomentbelastung zur Erzielung der Drehmomentverteilung eine Änderung der Antriebskonfiguration, insbesondere durch eine Ansteuerung einer Betriebsbremse, eines steuerbaren Getriebes o. dgl., vornimmt, vorzugsweise, dass die Soll-Drehmomentverteilung vom Bediener vorgebbar ist.

11. Arbeitssystem nach einem der vorhergehenden Ansprüche, **dadurch gekennzeichnet, dass** die Steuerungsanordnung (5) im Bremsbetrieb basierend auf der ermittelten Drehmomentbelastung die Antriebskonfiguration derart ändert, dass an den Antriebswellen (3e, f, i, j) der Laufräder (4) keine Drehmomentbelastung oder eine bremsende Drehmomentbelastung auftritt.

12. Arbeitssystem nach einem der vorhergehenden Ansprüche, **dadurch gekennzeichnet, dass** mindestens eine mittels der Steuerungsanordnung (5) schaltbare Differentialsperre (3d, 3h) vorgesehen ist und dass die Steuerungsanordnung (5) das Sperren und/oder Lösen der Differentialsperre (3d, 3h) ausschließlich in einem Zustand vornimmt, in dem die ermittelten Drehmomentbelastungen an den beiden der Differentialsperre zugeordneten Teilantriebssträngen dies zulassen, insbesondere in dem die ermittelten Drehmomentbelastungen an den beiden der Differentialsperre zugeordneten Teilantriebssträngen im Wesentlichen identisch sind.

13. Arbeitssystem nach einem der vorhergehenden Ansprüche, **dadurch gekennzeichnet, dass** die Steuerungsanordnung (5) eine Betriebsdauerzählerfunktion für den Antriebsstrang (3) und/oder für einzelne Antriebsstrangkomponenten (3a-k) bereitstellt und neben der Betriebsdauer auch die ermittelte Drehmomentbelastung speichert, vorzugsweise, dass die Steuerungsanordnung (5) die Geschwindigkeit der Betriebsdauerzählung belastungsabhängig vorgibt.

14. Steuerungsanordnung für ein landwirtschaftliches Arbeitssystem mit einer selbstfahrenden landwirtschaftlichen Arbeitsmaschine (1a), wobei die Arbeitsmaschine (1a) mit mindestens einem Anbaugerät (1b), insbesondere einem Bodenbearbeitungsgerät wie einem Pflug, einem Grubber oder einer Egge, bestückbar ist, wobei eine Antriebseinheit (2) der Arbeitsmaschine (1a) vorgesehen ist, die über einen Antriebsstrang (3) auf Laufräder (4) wirkt und wobei eine der Steuerungsanordnung (5) zugeordnete Bedien- und Anzeigeeinheit (6) vorgesehen ist, insbesondere mit den Merkmalen des kennzeichnenden Teil eines oder mehrerer der Ansprüche 2 bis 13, wobei die Steuerungsanordnung (5) für mindestens eine Antriebsstrangkomponente (3a-k), insbesondere für die Antriebswellen (3e,f,i,j) der Laufräder (4), die während des Arbeitsbetriebs auftretenden Drehmomentbelastungen ermittelt und basierend auf den ermittelten Drehmomentbelastungen mindestens eine Steuerungsfunktion bereitstellt, wobei der Arbeitsmaschine (1a) im Arbeitsbetrieb eine Antriebskonfiguration zugeordnet ist und dass während des Arbeitsbetriebs über die Antriebskonfiguration die Drehmomentbelastungen im Antriebsstrang (3) beeinflussbar sind und dass die Steuerungsanordnung (5) basierend auf den ermittelten Drehmomentbelastungen vorzugsweise während des Arbeitsbetriebs eine Bewertung und/oder Optimierung der Antriebskonfiguration im Hinblick auf verschiedene Zielvorgaben wie geringe Bruchwahrscheinlichkeit, nominelle Lebensdauer und/oder hohe Geräteleistung ermittelt und/oder einen Bedienerhinweis zu der Bewertung und/oder Optimierung im Hinblick auf mindestens eine Zielvorgabe abgibt und/oder die ermittelte Optimierung der Antriebskonfiguration vornimmt, **dadurch gekennzeichnet, dass** in einem Datenspeicher (10) der Steuerungsanordnung (5) ein Auslegungs-Lastkollektiv gespeichert ist, dem eine nominelle Lebensdauer des Antriebsstrangs (3) entspricht, dass die Steuerungsanordnung (5) aus der ermittelten Drehmomentbelastung ein Ist-Lastkollektiv für den Antriebsstrang (3) ermittelt, und dass die Steuerungsanordnung (5) das Ist-Lastkollektiv mit dem Auslegungs-Lastkollektiv vergleicht und basierend auf dem Vergleich eine Bewertung und/oder Optimierung der Antriebskonfiguration im Hinblick auf die Zielvorgabe einer nominellen Lebensdauer ermittelt.

## Claims

1. Agricultural working system with a self-propelled agricultural machine (1a), which can be fitted with at least one attachment unit (1b), in particular a soil cultivation device such as a plough, a cultivator or a harrow, wherein a drive unit (2) is provided, which acts via a drive train (3) on running wheels (4) and wherein a control arrangement (5) and a control and display unit (6) assigned to the control arrangement (5) are provided,
wherein the control arrangement (5) determines the torque loads occurring during the working operation for at least one drive train component (3a-k), in particular for the drive shafts (3e,f,i,j) of the running wheels (4) and, based on the determined torque loads, provides at least one control function, wherein a drive configuration is assigned to the machine (1a) in the working operation, and in that the torque loads in the drive train (3) can be influenced during the working operation via the drive configuration and in that, based on the determined torque loads, the control arrangement (5) determines, preferably during the working operation, an evaluation and/or optimization of the drive configuration with respect to different objectives such as low probability of fracture, nominal service life and/or high device performance and/or issues an operator prompt relating to the evaluation and/or optimization with respect to at least one objective and/or performs the determined optimization of the drive configuration,
**characterized in that**
a design load spectrum to which a nominal service life of the drive train (3) corresponds is stored in a memory (10) of the control arrangement (5), **in that** the control arrangement (5) determines an actual load spectrum for the drive train (3) from the determined torque load, and **in that** the control arrangement (5) compares the actual load spectrum with the design load spectrum and, based on the comparison, determines an evaluation and/or optimization of the drive configuration with respect to the objective of a nominal service life.

2. Working system according to claim 1, **characterized in that** at least a part of the control arrangement (5) is designed as a machine control and is arranged in the machine (1a), preferably **in that** at least a part of the control arrangement (5) is designed as a telemetry control and is arranged separately from the machine (1a).

3. Working system according to claim 1 or 2, **characterized in that**, from the twisting due to torque of the at least one drive train component (3a-k), the control arrangement (5) determines the torque load affecting this drive train component (3a-k), preferably **in that** the twisting due to torque is determined using at least one rotation sensor (8a) of an anti-lock braking system.

4. Working system according to claim 3, **characterized in that** the associated breaking loads for at least one drive train component (3a-k) are stored in a memory (10) of the control arrangement (5), **in that** the control arrangement (5) compares the determined torque loads with the respective breaking loads and, based on the comparison, determines an evaluation and/or optimization of the drive configuration with respect to the objective of a low probability of fracture,
and/or **in that** the drive configuration includes the ballasting of the machine (1a) and **in that** the evaluation and/or the optimization relates to the ballasting, and/or **in that** the drive configuration covers the height of the tow point between the machine and the attachment unit (1b) and **in that** the evaluation and/or optimization relates to the height of the tow point,
and/or **in that** the drive configuration covers the pressures of the tyres (4) and **in that** the evaluation and/or optimization relates to the pressures of the tyres (4).

5. Working system according to one of the preceding claims, **characterized in that**, from the determined torque load, the control arrangement (5) determines an actual load spectrum for the drive train (3) and **in that** the actual load spectrum is permanently stored, at least in sections, in a memory (10) of the control arrangement (5), in particular when the actual load spectrum exceeds the design load spectrum, and/or **in that** the control arrangement (5) only allows continued operation when the actual load spectrum exceeds the design load spectrum after confirmation by the operator.

6. Working system according to one of the preceding claims, **characterized in that** the parameters of predetermined operating situations, in particular hazardous operating situations, are stored in a memory (10) of the control arrangement (5), preferably **in that** the control arrangement (5) issues an operator prompt relating to the determination of an operating situation and/or **in that** the control arrangement (5) counteracts the operating situation, in particular by changing the drive configuration.

7. Working system according to claim 6, **characterized in that** the control arrangement (5) determines a torque load of the drive shafts (3e, f, i, j) of the running wheels (4) that is lop-sided with respect to the longitudinal axis of the machine (13) as a "tilting" operating situation,
and/or **in that** the control arrangement (5) determines a torque load on the drive shafts (3e, f, i, j) of the running wheels (4) that is increasing and cyclic and has a predetermined vibration amplitude as a "power-hopping" operating situation,
and/or **in that** the control arrangement (5) determines the occurrence of a shear load above the determined torque load on the drive shafts (3e, f, i, j) of the running wheels (4) as a "shearing" operating situation,
and/or **in that** the control arrangement (5) determines an increasing torque load in a predetermined range as a "blockage" operating situation of the attachment unit (1b).

8. Working system according to one of the preceding claims, **characterized in that**, in the case of a working operation with at least one trailer, when the determined torque load of the drive shafts (3e, f, i, j) of the running wheels (4) changes from a tensile load to a shear load, the control arrangement (5) actuates a corresponding braking of the at least one trailer to stop the trailer-train from jack-knifing.

9. Working system according to one of the preceding claims, **characterized in that** target power data of the drive unit (2) are stored in a memory (10) of the control arrangement (5) and **in that** the current power output of the drive unit (2) is determined based on the determined torque load and is compared with the target power data, and **in that** the control arrangement (5) issues an operator prompt relating to the respective deviation and/or stores the determined deviation.

10. Working system according to one of the preceding claims, **characterized in that** a target torque distribution over individual drive shafts (3a-k) is stored in a memory (10) of the control arrangement (5) and **in that**, based on the determined torque load, the control arrangement (5) makes a change to the drive configuration, in particular by actuating a service brake, a controllable gear mechanism or the like, to achieve the torque distribution, preferably **in that** the target torque distribution can be specified by the operator.

11. Working system according to one of the preceding claims, **characterized in that**, in a braking operation, the control arrangement (5) changes the drive configuration based on the determined torque load in such a way that no torque load, or a braking torque load, occurs on the drive shafts (3e, f, i, j) of the running wheels (4).

12. Working system according to one of the preceding claims, **characterized in that** at least one differential lock (3d, 3h) that can be switched by means of the control arrangement (5) is provided and **in that** the control arrangement (5) performs the locking and/or releasing of the differential lock (3d, 3h) exclusively in a state in which the determined torque loads on the two partial drive trains assigned to the differential lock permit this, in particular in which the determined torque loads on the two partial drive trains assigned to the differential lock are substantially identical.

13. Working system according to one of the preceding claims, **characterized in that** the control arrangement (5) provides an operating time counter function for the drive train (3) and/or for individual drive train components (3a-k) and, in addition to the operating time, also stores the determined torque load, preferably **in that** the control arrangement (5) specifies the speed of the operating time counting as a function of load.

14. Control arrangement for an agricultural working system with a self-propelled agricultural machine (1a), wherein the machine (1a) can be fitted with at least one attachment unit (1b), in particular a soil cultivation device such as a plough, a cultivator or a harrow, wherein a drive unit (2) of the machine (1a) is provided, which acts via a drive train (3) on running wheels (4) and wherein a control and display unit (6) assigned to the control arrangement (5) is provided, in particular with the features of the characterizing part of one or more of claims 2 to 13,
wherein the control arrangement (5) determines the torque loads occurring during the working operation for at least one drive train component (3a-k), in particular for the drive shafts (3e,f,i,j) of the running wheels (4) and, based on the determined torque loads, provides at least one control function, wherein a drive configuration is assigned to the machine (1a) in the working operation, and in that the torque loads in the drive train (3) can be influenced during the working operation via the drive configuration and in that, based on the determined torque loads, the control arrangement (5) determines, preferably during the working operation, an evaluation and/or optimization of the drive configuration with respect to different objectives such as low probability of fracture, nominal service life and/or high device performance and/or issues an operator prompt relating to the evaluation and/or optimization with respect to at least one objective and/or performs the determined optimization of the drive configuration,
**characterized in that**
a design load spectrum to which a nominal service life of the drive train (3) corresponds is stored in a memory (10) of the control arrangement (5), **in that** the control arrangement (5) determines an actual load spectrum for the drive train (3) from the determined torque load, and **in that** the control arrangement (5) compares the actual load spectrum with the design load spectrum and, based on the comparison, determines an evaluation and/or optimization of the drive configuration with respect to the objective of a nominal service life.

## Revendications

1. Ensemble de travail agricole comprenant une machine de travail agricole automotrice (1a) qui peut être équipée d'au moins un outil porté (1b), en particulier d'un outil de travail du sol tel qu'une charrue, un cultivateur ou une herse, une unité d'entraînement (2) étant prévue, laquelle agit sur des roues de roulement (4) par l'intermédiaire d'une chaîne de transmission (3), et un agencement de commande (5) et une unité d'actionnement et d'affichage (6) associée à l'agencement de commande (5) étant prévus, l'agencement de commande (5) déterminant, pour au moins un composant de chaîne de transmission (3a-k), en particulier pour les arbres d'entraînement (3e,f,i,j) des roues de roulement (4), les charges de couple survenues pendant le fonctionnement de travail et, sur la base des charges de couple déterminées, fournissant une fonction de commande, à la machine de travail (1a) étant associée en fonctionnement de travail une configuration d'entraînement, et pendant le fonctionnement de travail les charges de couple dans la chaîne de transmission (3) pouvant être influencées par l'intermédiaire de la configuration d'entraînement, et l'agencement de commande (5) déterminant, sur la base des charges de couple déterminées, de préférence pendant le fonctionnement de travail, une évaluation et/ou une optimisation de la configuration d'entraînement par rapport à divers objectifs tels que faible probabilité de rupture, durée de vie nominale et/ou rendement d'outil élevé, et/ou délivrant une information utilisateur au sujet de l'évaluation et/ou de l'optimisation par rapport à au moins un objectif et/ou effectuant l'optimisation déterminée de la configuration d'entraînement, **caractérisé en ce que** dans une mémoire de données (10) de l'agencement de commande (5) est mémorisé un collectif de charges de conception auquel correspond une durée de vie nominale de la chaîne de transmission (3), **en ce qu'**à partir de la charge de couple déterminée, l'agencement de commande (5) détermine un collectif de charges réel pour la chaîne de transmission (3), et **en ce que** l'agencement de commande (5) compare le collectif de charges réel avec le collectif de charges de conception et, sur la base de la comparaison, détermine une évaluation et/ou optimisation de la configuration d'entraînement par rapport à l'objectif d'une durée de vie nominale.

2. Ensemble de travail selon la revendication 1, **caractérisé en ce qu'**au moins une partie de l'agencement de commande (5) est conformée en commande de machine et disposée dans la machine de travail (1a), de préférence **en ce qu'**au moins une partie de l'agencement de commande (5) est conformée en commande télémétrique et est disposée séparément de la machine de travail (1a).

3. Ensemble de travail selon la revendication 1 ou 2, **caractérisé en ce qu'**à partir de la torsion, due au couple, du au moins un composant de chaîne de transmission (3a-k), l'agencement de commande (5) détermine la charge de couple relative à ce composant de chaîne de transmission (3a-k), de préférence **en ce que** la détermination de la torsion due au couple s'effectue en utilisant au moins un capteur de rotation (8a) d'un système antiblocage.

4. Ensemble de travail selon la revendication 3, **caractérisé en ce que** dans une mémoire de données (10) de l'agencement de commande (5) pour au moins un composant de chaîne de transmission (3a-k) sont mémorisées les charges de rupture correspondantes, **en ce que** l'agencement de commande (5) compare les charges de couple déterminées avec les charges de rupture respectives et, sur la base de la comparaison, détermine une évaluation et/ou une optimisation de la configuration d'entraînement par rapport à l'objectif d'une faible probabilité de rupture, et/ou **en ce que** la configuration d'entraînement englobe le ballastage de la machine de travail (1a), **en ce que** l'évaluation et/ou l'optimisation concerne le ballastage et/ou **en ce que** la configuration d'entraînement englobe la hauteur du point de traction entre la machine de travail et l'outil porté (1b), et **en ce que** l'évaluation et/ou l'optimisation concerne la hauteur du point de traction, et/ou **en ce que** la configuration d'entraînement englobe les pressions de pneumatiques des pneumatiques de roulement (4) et **en ce que** l'évaluation et/ou l'optimisation concerne les pressions de pneumatiques des pneumatiques de roulement (4).

5. Ensemble de travail selon une des revendications précédentes, **caractérisé en ce qu'**à partir de la charge de couple déterminée, l'agencement de commande (5) déterminée un collectif de charges réel pour la chaîne de transmission (3) et **en ce que** dans une mémoire de données (10) de l'agencement de commande (5) le collectif de charges réel est mémorisé durablement au moins par portions, en particulier pendant un surpassement du collectif de charges de conception par le collectif de charges réel, et/ou **en ce qu'**en cas de surpassement du collectif de charges de conception par le collectif de charges réel, l'agencement de commande (5) n'autorise une poursuite du fonctionnement qu'après acquittement par l'utilisateur.

6. Ensemble de travail selon une des revendications précédentes, **caractérisé en ce que**, dans une mémoire de données (10) de l'agencement de commande (5), les paramètres de situations de fonctionnement prédéterminées, en particulier de situations de fonctionnement dangereuses, sont mémorisés, de préférence **en ce que** l'agencement de commande (5) délivre une information utilisateur au sujet de la détermination d'une situation de fonctionnement et/ou **en ce que** l'agencement de commande (5) réagit à la situation de fonctionnement en particulier en modifiant la configuration d'entraînement.

7. Ensemble de travail selon la revendication 6, **caractérisé en ce que** l'agencement de commande (5) détecte comme situation de fonctionnement « situation de basculement » une charge de couple unilatérale, exercée suivant l'axe longitudinal de machine (13), sur les arbres d'entraînement (3e, f, i, j) des roues de roulement (4), et/ou **en ce que** l'agencement de commande (5) détecte comme situation de fonctionnement « power-hopping » une charge de couple cyclique croissante à amplitude d'oscillation prédéterminée sur les arbres d'entraînement (3e, f, i, j) des roues de roulement (4), et/ou l'agencement de commande (5) détecte comme situation de fonctionnement « situation de poussée » la survenue d'une charge de poussée par l'intermédiaire de la charge de couple déterminée sur les arbres d'entraînement (3e, f, i, j) des roues de roulement (4), et/ou l'agencement de commande (5) détecte comme situation de fonctionnement « situation de bourrage » de l'outil porté (1b) une charge de couple croissante d'une ampleur prédéterminée.

8. Ensemble de travail selon une des revendications précédentes, **caractérisé en ce qu'**en cas de fonctionnement de travail avec au moins une remorque, l'agencement de commande (5) déclenche un freinage correspondant de la au moins une remorque si la charge de couple déterminée sur les arbres d'entraînement (3e, f, i, j) des roues de roulement (4) passe d'une charge de traction à une charge de poussée, afin d'éviter une mise en portefeuille de l'attelage.

9. Ensemble de travail selon une des revendications précédentes, **caractérisé en ce que** dans une mémoire de données (10) de l'agencement de commande (5) sont mémorisées des données de puissance de consigne de l'unité d'entraînement (2), et **en ce que**, sur la base de la charge de couple déterminée, la puissance délivrée momentanée délivrée par l'unité d'entraînement (2) est déterminée et comparée à des données de puissance de consigne, et **en ce que** l'agencement de commande (5) délivre une information utilisateur au sujet de l'écart respectif et/ou mémorise l'écart déterminé.

10. Ensemble de travail selon une des revendications précédentes, **caractérisé en ce que** dans une mémoire de données (10) de l'agencement de commande (5) est mémorisée une répartition de couple de consigne sur les différents arbres d'entraînement (3a-k) et **en ce que**, pour obtenir la répartition de couple, l'agencement de commande (5) effectue, sur la base de la charge de couple déterminée, une modification de la configuration d'entraînement, en particulier en actionnant un frein de service, une transmission commandée ou analogue, de préférence **en ce que** la répartition de couple de consigne est prescriptible par l'utilisateur.

11. Ensemble de travail selon une des revendications précédentes, **caractérisé en ce qu'**en mode de freinage, l'agencement de commande (5) modifie, sur la base de la charge de couple déterminée, la configuration d'entraînement de façon qu'aucune charge de couple ou charge de couple freinante n'apparaisse sur les arbres d'entraînement (3e,f,i,j) des roues de roulement (4).

12. Ensemble de travail selon une des revendications précédentes, **caractérisé en ce qu'**au moins un blocage de différentiel (3d, 3h) commutable au moyen de l'agencement de commande (5) est prévu, et **en ce que** l'agencement de commande (5) n'effectue un blocage et/ou une libération du blocage de différentiel (3d, 3h) que dans un état où les charges de couple déterminées sur les deux chaînes partielles de transmission associées au blocage de différentiel l'autorisent, en particulier où les charges de couple déterminées sur les deux chaînes partielles de transmission associées au blocage de différentiel sont sensiblement identiques.

13. Ensemble de travail selon une des revendications précédentes, **caractérisé en ce que** l'agencement de commande (5) fournit une fonction de comptage de durée de fonctionnement pour la chaîne de transmission (3) et/ou pour des composants de chaîne de transmission individuels (3a-k) et, à part la durée de fonctionnement, mémorise aussi la charge de couple déterminée, de préférence **en ce que** l'agencement de commande (5) prescrit la vitesse de comptage de durée de fonctionnement en fonction de la charge.

14. Agencement de commande pour un ensemble de travail agricole comprenant une machine de travail agricole automotrice (1a), la machine de travail (1a) pouvant être équipée d'au moins un outil porté (1b), en particulier d'un outil de travail du sol tel qu'une charrue, un cultivateur ou une herse, une unité d'entraînement (2) de la machine de travail (1a) étant prévue, laquelle agit sur des roues de roulement (4) par l'intermédiaire d'une chaîne de transmission (3), et une unité d'actionnement et d'affichage (6) associée à l'agencement de commande (5) étant prévue, en particulier avec les caractéristiques de la partie caractérisante d'une ou plusieurs des revendications 2 à 13, l'agencement de commande (5) déterminant, pour au moins un composant de chaîne de transmission (3a-k), en particulier pour les arbres d'entraînement (3e,f,i,j) des roues de roulement (4), les charges de couple survenues pendant le fonctionnement de travail et, sur la base des charges de couple déterminées, fournissant une fonction de commande, à la machine de travail (1a) étant associée en fonctionnement de travail une configuration d'entraînement, et pendant le fonctionnement de travail les charges de couple dans la chaîne de transmission (3) pouvant être influencées par l'intermédiaire de la configuration d'entraînement, et l'agencement de commande (5) déterminant, sur la base des charges de couple déterminées, de préférence pendant le fonctionnement de travail, une évaluation et/ou une optimisation de la configuration d'entraînement par rapport à divers objectifs tels que faible probabilité de rupture, durée de vie nominale et/ou rendement d'outil élevé, et/ou délivrant une information utilisateur au sujet de l'évaluation et/ou de l'optimisation par rapport à au moins un objectif et/ou effectuant l'optimisation déterminée de la configuration d'entraînement, **caractérisé en ce que** dans une mémoire de données (10) de l'agencement de commande (5) est mémorisé un collectif de charges de conception auquel correspond une durée de vie nominale de la chaîne de transmission (3), **en ce qu'**à partir de la charge de couple déterminée, l'agencement de commande (5) détermine un collectif de charges réel pour la chaîne de transmission (3), et **en ce que** l'agencement de commande (5) compare le collectif de charges réel avec le collectif de charges de conception et, sur la base de la comparaison, détermine une évaluation et/ou optimisation de la configuration d'entraînement par rapport à l'objectif d'une durée de vie nominale.
